# FASCICULE DE BREVET EUROPEEN

(11) **EP 3 057 201 B1**
(45) Date de publication et mention de la délivrance du brevet: **03.08.2022**
(21) Numéro de dépôt: 16155035.5
(22) Date de dépôt: 10.02.2016
(51) Int. Cl.: H02K 1/276, H02K 1/04

(54) **ROTOR DE MOTEUR ÉLECTRIQUE ET MOTEUR ÉLECTRIQUE CORRESPONDANT**
ROTOR EINES ELEKTROMOTORS, UND ENTSPRECHENDER ELEKTROMOTOR
ELECTRIC MOTOR ROTOR AND ELECTRIC MOTOR ASSOCIATED

(30) Priorité: 16.02.2015 FR 1551282
(43) Date de publication de la demande: 17.08.2016
(73) Titulaire: ALSTOM Transport Technologies, 93400 Saint-Ouen (FR)
(72) Inventeur: RANDRIA, Andry, 25000 BESANCON (FR); RAGUIN, Bruno, 25720 BEURE (FR)
(74) Mandataire: Lavoix

(56) Documents cités:
- EP-A2- 1 014 542
- DE-A1-102006 011 729
- US-A- 5 838 086
- US-A1- 2013 249 342

## Description

La présente invention concerne un rotor de moteur électrique comprenant un corps de forme sensiblement cylindrique, conducteur de champ magnétique, délimitant au moins un logement recevant un groupe d'aimants comprenant au moins deux aimants permanents.

Le document US 5838086 décrit un moteur synchrone comportant des aimants permanents insérés dans un rotor.

Le document EP 2 264 860 décrit un rotor de moteur électrique comprenant un assemblage feuilleté tubulaire et des aimants « enterrés », c'est-à-dire ne s'étendant pas sur la périphérie du rotor. Des logements formés dans cet assemblage reçoivent chacun un groupe d'aimants permanents, chaque groupe d'aimants permanents formant un pôle magnétique du rotor. Tous les aimants d'un même groupe sont recouverts, sur chacune de leurs faces, d'un matériau isolant électrique destiné à isoler les aimants entre eux et par rapport à l'assemblage feuilleté.

Un tel rotor ne donne pas entière satisfaction. En effet, l'ajout d'un matériau isolant entourant les aimants individuellement sur chacune de leurs faces augmente le coût de fabrication du rotor et complexifie le procédé d'assemblage.

Un but de l'invention est de proposer un rotor de moteur électrique présentant des propriétés magnétiques satisfaisantes tout en pouvant être assemblé de manière simple et rapide.

A cet effet, l'invention a pour objet un rotor de moteur électrique selon la revendication 1.

L'invention permet d'éviter l'ajout d'un matériau isolant sur chacune des faces des - aimants permanents, ce qui simplifie le procédé d'assemblage du rotor, et de mettre en œuvre un rotor moins onéreux qu'un rotor avec des blocs d'éléments magnétiques collés et isolés entre eux.

Le rotor selon l'invention peut comprendre une ou plusieurs des caractéristiques selon les revendications 2 à 11.

L'invention a également pour objet un moteur électrique selon la revendication 12.

L'invention sera mieux comprise à la lecture de la description qui suit, donnée uniquement à titre d'exemple et faite en se référant aux dessins annexés, sur lesquels :
- la figure 1 est une vue en coupe radiale d'un rotor conforme à l'invention ;
- la figure 2 est une vue en coupe de détail d'un pôle du rotor de la figure 1 ; et
- la figure 3 est une vue simplifiée en coupe radiale d'un rotor suivant un second mode de réalisation de l'invention.

Dans tout ce qui suit, le terme de direction « axiale » s'entend comme la direction s'étendant selon l'axe de rotation d'un moteur 1 et le terme de direction « radiale » s'entend comme une direction perpendiculaire à cet axe de rotation.

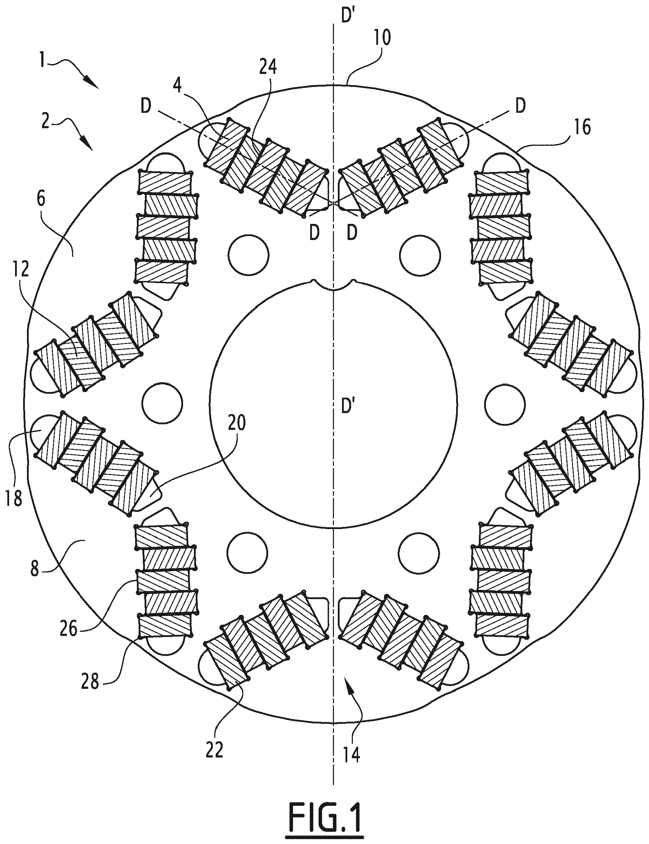

Tel que représenté sur la figure 1, un moteur électrique 1 comprend un stator solidaire d'un carter (non représentés) et un rotor 2 solidaire d'un arbre et mobile en rotation autour d'un axe par rapport au stator.

Le rotor 2 comprend un moyeu (non représenté) solidarisé en rotation à l'aide de moyens d'entrainement non représentés sur l'arbre, un assemblage feuilleté de forme tubulaire, sensiblement cylindrique, s'étendant selon l'axe de rotation, entourant le moyeu et emmanché serré à la périphérie du moyeu à chacune de ses extrémités axiales, et des éléments magnétiques 4 sous la forme d'aimants permanents, répartis sur le pourtour intérieur de l'assemblage feuilleté.

Les éléments magnétiques 4 sont des aimants permanents, chacun étant réalisé sous forme d'un bloc élémentaire unique, par exemple, sensiblement parallélépipédique et présentant un chanfrein sur chacune de ses arêtes, pour faciliter son insertion dans l'assemblage feuilleté, comme cela sera décrit ultérieurement.

Les aimants permanents 4 sont réalisés, par exemple, en samarium cobalt (SmCo) ou en néodyme fer bore (NdFeB). Pour un aimant permanent 4 en néodyme fer bore, la surface externe de l'aimant permanent 4 comprend avantageusement un revêtement de surface le protégeant de la corrosion.

L'assemblage feuilleté est formé par un empilement de corps 6 en forme de feuille métallique usinée ou découpée, conducteurs de champ magnétique, l'assemblage feuilleté étant recouvert sur ses surfaces radiales extérieures, par un plateau isolant magnétique (non représenté) destiné à maintenir les aimants permanents 4 logés à l'intérieur de l'empilement. C'est-à-dire que les feuilles métalliques situées aux extrémités axiales de l'empilement sont recouvertes par un plateau isolant, formé par exemple par une feuille de matériau isolant.

Le plateau isolant magnétique est apte à bloquer le déplacement axial des aimants permanents 4. Le plateau isolant magnétique est propre à éviter les court-circuits de flux magnétique.

Le plateau isolant comprend un plateau non ferromagnétique, avantageusement en alliage d'aluminium. Le plateau isolant est vissé sur le moyeu.

Les corps 6 sont empilés selon l'axe de rotation pour former l'assemblage feuilleté. Les corps 6 sont formés par une matrice métallique.

Chaque corps 6 s'étend suivant l'axe de rotation du rotor 2. Le corps 6 est de forme sensiblement cylindrique et présente une forme annulaire.

Le corps 6 comprend une première et une seconde surface principale 8 plane, s'étendant dans un plan radial, c'est-à-dire sensiblement perpendiculaire à l'axe de rotor 2, et une surface périphérique 10 reliant les première et seconde surfaces principales 8 aux extrémités radiales extérieures des surfaces principales 8 et s'étendant selon la direction axiale.

Comme illustré sur la figure 1, l'assemblage feuilleté délimite des logements 12, traversant l'assemblage selon un axe s'étendant selon la direction axiale, formant des pôles magnétiques 14, chaque pôle étant formé d'une paire de logements 12. Selon le mode de réalisation représenté sur les figures, l'assemblage feuilleté comprend par exemple douze logements 12 formant six pôles magnétiques 14.

La surface périphérique 10 du corps comprend des faces 16, chaque face 16 s'étendant entre deux pôles 14 adjacents circonférentiellement. Les faces 16, par exemple sensiblement planes, sont reliées entre elles par des tronçons courbes présentant une section en arc de cercle de rayon égal au rayon de l'assemblage, chaque tronçon courbe s'étendant en regard de deux logements 12 adjacents. La surface périphérique 10 et les faces 16 définissent l'allure du flux magnétique généré.

Chaque logement 12 du corps est destiné à recevoir une pluralité d'aimants permanents 4 ayant une même polarité.

Chaque logement 12 est sensiblement un trou oblong traversant le rotor 2 et débouchant axialement dans les surfaces principales extérieures de l'assemblage feuilleté. Les logements 12 sont à distance de la surface périphérique 10 du corps. Le logement 12 s'étend, en section, c'est-à-dire dans un plan radial, suivant un axe principal D, entre une première extrémité 18 proche de la surface périphérique 10 et une seconde extrémité 20 s'étendant à distance de la surface périphérique 10 et plus proche de l'axe de rotation.

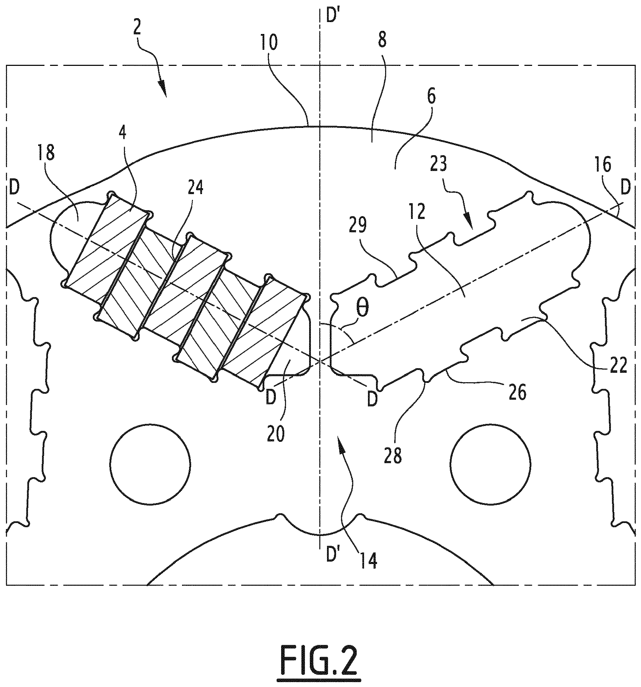

L'axe principal D du logement 12 est sensiblement perpendiculaire à la direction axiale et forme un angle non nul θ avec un axe radial D' passant entre ce logement et un logement adjacent, comme représenté sur la figure 2.

Deux logements 12 adjacents circonférentiellement et sensiblement symétriques l'un de l'autre par rapport à l'axe radial D' passant entre ces deux logements 12 forment un pôle 14. Ces deux logements 12 forment ainsi un V. Selon le mode de réalisation représenté sur les figures, six pôles 14 sont répartis symétriquement sur la surface principale 8 du corps. Les logements 12 de chaque pôle 14 présentent des aimants permanents 4 d'une même polarité. Deux pôles 14 adjacents circonférentiellement présentent successivement une alternance de polarité des aimants permanents 4.

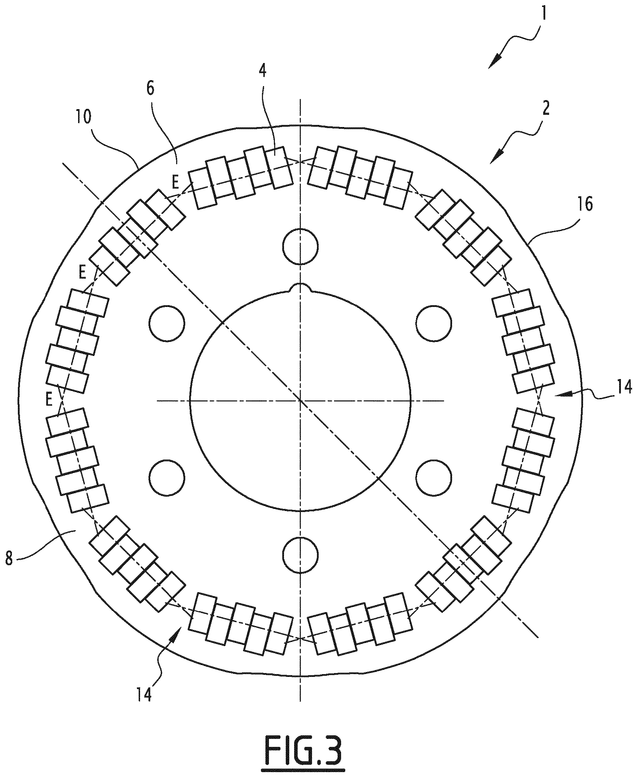

En variante, comme illustré par la figure 3, le logement 12 s'étend suivant un axe principal E, sensiblement perpendiculaire à un axe radial passant par un axe de symétrie du logement 12.

La première extrémité 18 du logement a, par exemple, sensiblement le contour d'un demi-cercle dont un rayon s'étend selon l'axe principal D du logement 12.

La seconde extrémité 20 du logement présente le contour d'un demi-cercle dégauchi. La seconde extrémité 20 présente un contour agencé pour avantageusement répartir, de manière homogène, les contraintes internes liées au retrait de matière des logements 12.

Le logement 12 présente, en outre, un arrangement d'encoches 22 et de zones intermédiaires 23 de sorte que deux encoches 22 successives selon l'axe principal D du logement 12 soient séparées par une zone intermédiaire 23, et qu'une encoche 22, selon une direction perpendiculaire à la direction principale et axiale du logement 12, soit en face d'une zone intermédiaire 23 dans un même logement 12.

Les encoches 22 sont destinées à recevoir une extrémité longitudinale de l'aimant permanent 4 de sorte que deux aimants 4 adjacents circonférentiellement du logement 12 sont séparés l'un de l'autre par une lame d'air 24.

Les encoches 22 s'étendent parallèlement à l'axe de rotation du rotor 2 et forme une partie extrême du logement 12 selon un axe perpendiculaire à l'axe principal D du logement 12 et à la direction axiale. Deux encoches 22 adjacentes et/ou en regard selon la direction perpendiculaire à l'axe principal D du logement 12, sont décalées circonférentiellement.

L'encoche 22 est sensiblement en forme de queue d'aronde contenant pour faciliter l'insertion des aimants permanents 4. Comme illustré sur la figure 2, l'encoche 22 présente un fond 26 plan s'étendant longitudinalement selon l'axe de rotation du rotor 2 et transversalement selon l'axe principal D du logement 12, relié à la zone intermédiaire 23 par deux pans s'étendant selon un axe sensiblement perpendiculaire à l'axe principal D.

L'encoche 22 présente également un dégagement d'angle 28 à l'intersection entre le fond 26 et les pans reliant à la zone intermédiaire 23.

Le fond 26 présente une largeur, suivant l'axe principal D, supérieure à la largeur de l'aimant permanent 4. L'écart entre la largeur du fond 26 et celle de l'aimant permanent 4 est d'environ 0,1 mm.

La zone intermédiaire 23 forme l'autre partie extrême du logement 12 selon un axe perpendiculaire à l'axe principal D du logement 12 et à la direction axiale et présente les deux pans, et un pan intermédiaire 29 s'étendant entre deux encoches 22 successives suivant l'axe principal D du logement 12.

Le pan intermédiaire 29 présente une largeur supérieure à la largeur du fond 26, propre à former la lame d'air isolation. L'écart entre la largeur du pan intermédiaire 29 et celle du fond 26 est d'environ 0,1 mm.

L'intersection entre les deux pans et le pan intermédiaire 29 est avantageusement arrondie.

Chaque encoche 22 et chaque zone intermédiaire 23 présentent ainsi une forme adaptée pour séparer chaque aimant permanent 4 d'un autre aimant permanent 4 adjacent circonférentiellement, de manière à réaliser une isolation par la lame d'air 24 entre chaque aimant permanent 4 adjacent circonférentiellement, c'est-à-dire que les aimants permanents adjacents ne sont pas en contact entre eux.

Les encoches 22 sont configurées de telle sorte que deux aimants 4 adjacents circonférentiellement dans un même logement 12 sont séparés l'un de l'autre par la lame d'air 24 lorsque les extrémités des aimants permanents 4 sont engagées dans les encoches 22 respectives.

La lame d'air 24 s'étend dans un plan sensiblement perpendiculaire à l'axe principal D du logement 12.

La lame d'air 24 s'étend ainsi entre des faces latérales de deux aimants permanents 4 adjacents circonférentiellement. La lame d'air 24 présente avantageusement une épaisseur supérieure à 0,01 mm, par exemple égale à 0,1 mm.

En outre, l'encoche 22 présente une forme adaptée pour minimiser les contacts entre l'aimant permanent 4 et le corps 6 du rotor.

L'ajustement de l'aimant permanent 4 entre les faces du fond 26 et du pan intermédiaire 29, est un ajustement glissant, de sorte à permettre une mise en place à la main, une immobilisation et un démontage de l'aimant 4 de son encoche 22, sans détérioration de l'aimant 4. La présence de chanfrein sur les arêtes de l'aimant facilite cette mise en place comme décrit précédemment.

Les aimants permanents 4 sont ainsi montés glissants dans les encoches 22 du logement, ils sont amovibles individuellement des encoches 22 du logement. Les aimants permanents 4 peuvent bouger sous l'effet des vibrations et/ou des variations de vitesse et du champ magnétique mais ne peuvent pas entrer en contact.

Les aimants permanents 4 sont libres de bouger suivant un jeu délimité par l'ajustement entre l'aimant 4 et le logement 12 du corps. Cet ajustement, défini entre le logement 12 et les aimants permanents 4, empêche tout contact entre deux aimants 4 adjacents circonférientiellement.

Un tel rotor 2 permet, grâce aux lames d'air 24 séparant les aimants 4, d'éviter l'ajout d'un matériau isolant pour garantir que les aimants permanents 4 soient isolés entre eux. Un tel rotor 2 présente l'avantage de pouvoir utiliser des aimants permanents 4 insérés dans les encoches 22 moins onéreux que des blocs d'éléments magnétiques collés et isolés entre eux.

Un tel rotor 2 présente l'avantage de pouvoir faciliter la mise en place des aimants permanents 4 dans le logement 12 dit «enterré» comparé à un logement dit « en surface ».

Le rotor 2 présente l'avantage d'empêcher les aimants permanents 4 de se toucher entre eux grâce à la forme des encoches 22 du corps. Si le contact se produit entre deux aimants 4 adjacents circonférentiellement ou entre aimants permanents 4 avec le corps 6, celui-ci est localisé et ponctuel. Par conséquent, l'augmentation de pertes dans les aimants reste très faible et le rendement du moteur reste très élevé.

## Revendications

1. Rotor (2) de moteur électrique (1) comprenant un corps (6) de forme sensiblement cylindrique, conducteur de champ magnétique, délimitant au moins un logement (12) recevant un groupe d'aimants (4) comprenant au moins deux aimants permanents (4) adjacents circonférentiellement,
au moins deux aimants permanents (4) adjacents d'au moins un logement (12) étant éparés l'un de l'autre par une lame d'air (24), et le logement (12) délimitant des encoches (22) de réception desdits aimants permanents (4), **caractérisé en ce que** les encoches (22) sont configurées de telle sorte que les aimants permanents (4) adjacents sont séparés par la lame d'air (24),
l'ajustement entre les encoches (22) et les aimants permanents (4) étant au moins un ajustement glissant de sorte à permettre une mise en place à la main des aimants permanents (4) dans leurs encoches (22), une immobilisation des aimants permanents (4) dans leurs encoches (22), et un démontage des aimants permanents (4) de leurs encoches (22) sans détérioration des aimants permanents (4), et **en ce que** les aimants permanents (4) sont amovibles individuellement des encoches (22) du logement (12) et peuvent bouger sous l'effet des vibrations et/ou des variations de vitesse et du champ magnétique mais ne peuvent pas entrer en contact.

2. Rotor (2) selon la revendication 1, dans lequel la lame d'air (24) présente une épaisseur supérieure ou égale à 0,01 mm.

3. Rotor (2) selon la revendication 1 ou 2, dans lequel chaque aimant permanent (4) est inséré dans une encoche (22) respective par l'une de ses extrémités longitudinales, et les encoches (22) sont configurées de telle sorte que deux aimants permanents (4) adjacents circonférentiellement d'un même logement (12) sont séparés l'un de l'autre par la lame d'air (24) lorsque leurs extrémités sont engagées dans leurs encoches (22) respectives.

4. Rotor (2) selon l'une quelconque des revendications 1 à 3, dans lequel deux aimants permanents (4) adjacents circonférentiellement, respectivement insérés dans une encoche (22) du logement (12), sont décalés radialement.

5. Rotor (2) selon l'une quelconque des revendications 1 à 4, dans lequel chaque aimant permanent (4) présente une forme de bloc élémentaire unique ayant un chanfrein sur chacune de ses arêtes.

6. Rotor (2) selon l'une quelconque des revendications 1 à 5, dans lequel la périphérie (10) du corps (6) est formée par une matrice métallique dudit corps (6), le logement (12) s'étendant à distance de ladite périphérie (10).

7. Rotor (2) selon l'une quelconque des revendications 1 à 6, dans lequel l'axe principal du logement (12) forme un angle non nul avec une direction radiale du corps (6).

8. Rotor (2) selon l'une quelconque des revendications 1 à 7, dans lequel deux logements (12) adjacents circonférentiellement et symétrique suivant la direction radiale du corps (6), forment un pôle (14) magnétique en forme de V ou un pôle (14) magnétique sensiblement plan.

9. Rotor (2) selon la revendication 8, dans lequel le corps (6) comprend plusieurs pôles (14) répartis symétriquement suivant une symétrie par rotation.

10. Rotor (2) selon la revendication 8 ou 9, dans lequel le corps (6) comprend une face sensiblement plane (16) s'étendant à la périphérie (10) dudit corps (6) entre deux pôles (14) adjacents circonférentiellement.

11. Rotor (2) selon l'une quelconque des revendications 1 à 10, dans lequel il comprend un empilement de corps (6) formant un assemblage feuilleté.

12. Moteur électrique (1) comprenant un rotor (2) selon l'une quelconque des revendications précédentes.

## Patentansprüche

1. Rotor (2) eines Elektromotors (1), umfassend einen Körper (6) von im Wesentlichen zylindrischer Form, der ein Magnetfeld leitet, der mindestens ein Gehäuse (12) begrenzt, das eine Gruppe von Magneten (4) aufnimmt, umfassend mindestens zwei in Umfangsrichtung angrenzende Permanentmagnete (4),
mindestens zwei angrenzende Permanentmagnete (4) von mindestens einem Gehäuse (12), die durch einen Luftspalt (24) voneinander getrennt sind, und wobei das Gehäuse (12) Kerben (22) zum Aufnehmen der Permanentmagnete (4) begrenzt, **dadurch gekennzeichnet, dass** die Kerben (22) konfiguriert sind, sodass die angrenzende Permanentmagnete (4) durch den Luftspalt (24) getrennt sind, wobei die Passung zwischen den Kerben (22) und den Permanentmagneten (4) mindestens eine Gleitpassung ist, sodass ein manuelles Einsetzen der Permanentmagnete (4) in ihre Kerben (22) ermöglicht wird, eine Fixierung der Permanentmagnete (4) in ihren Kerben (22) und eine Demontage der Permanentmagnete (4) aus ihren Kerben (22) ohne Beschädigung der Permanentmagnete (4) ermöglicht, und dass die Permanentmagnete (4) einzeln aus den Kerben (22) des Gehäuses (12) entfernbar sind und sich unter dem Einfluss von Vibrationen und/oder Änderungen der Geschwindigkeit und des Magnetfelds bewegen können, aber nicht in Kontakt kommen können.

2. Rotor (2) nach Anspruch 1, wobei der Luftspalt (24) eine Stärke von 0,01 mm oder mehr aufweist.

3. Rotor (2) nach Anspruch 1 oder 2, wobei jeder Permanentmagnet (4) mit einem seiner Längsenden in eine entsprechende Kerbe (22) eingesetzt ist und die Kerben (22) konfiguriert sind, um zwei in Umfangsrichtung angrenzende Permanentmagnete (4) desselben Gehäuses (12) durch den Luftspalt (24) voneinander getrennt sind, wenn ihre Enden in ihre entsprechenden Kerben (22) eingreifen.

4. Rotor (2) nach einem der Ansprüche 1 bis 3, wobei zwei in Umfangsrichtung angrenzende Permanentmagnete (4), die jeweils in eine Kerbe (22) des Gehäuses (12) eingesetzt sind, radial versetzt sind.

5. Rotor (2) nach einem der Ansprüche 1 bis 4, wobei jeder Permanentmagnet (4) eine einzelne elementare Blockform mit einer Abschrägung an jeder seiner Kanten aufweist.

6. Rotor (2) nach einem der Ansprüche 1 bis 5, wobei der Umfang (10) von jedem Körper (6) durch eine Metallmatrix des Körpers (6) gebildet ist, wobei sich das Gehäuse (12) von dem Umfang (10) weg erstreckt.

7. Rotor (2) nach einem der Ansprüche 1 bis 6, wobei die Hauptachse des Gehäuses (12) einen Winkel ungleich Null zu einer radialen Richtung des Körpers (6) bildet.

8. Rotor (2) nach einem der Ansprüche 1 bis 7, wobei zwei in Umfangsrichtung angrenzende und in radialer Richtung des Körpers (6) symmetrische Gehäuse (12) einen V-förmigen Magnetpol (14) oder einen im Wesentlichen ebenen Magnetpol (14) bilden.

9. Rotor (2) nach Anspruch 8, wobei der Körper (6) mehrere Pole (14) umfasst, die symmetrisch entlang einer Rotationssymmetrie verteilt sind.

10. Rotor (2) nach Anspruch 8 oder 9, wobei der Körper (6) eine im Wesentlichen ebene Fläche (16) umfasst, die sich am Umfang (10) des Körpers (6) zwischen zwei in Umfangsrichtung angrenzenden Polen (14) erstreckt.

11. Rotor (2) nach einem der Ansprüche 1 bis 10, wobei er einen Stapel von Körpern (6) umfasst, die eine laminierte Anordnung bilden.

12. Elektromotor (1), umfassend einen Rahmen (2) nach einem der vorherigen Ansprüche.

## Claims

1. An electric motor (1) rotor (2) comprising a substantially cylindrical body (6), conducting a magnetic field, defining at least one housing (12) receiving a group of magnets (4) comprising at least two circumferentially adjacent permanent magnets (4),
at least two permanent magnets (4) adjacent of at least one housing (12) being separated from one another by an air knife (24), and
the housing (12) defining notches (22) for receiving said permanent magnets (4),
**characterized in that** the notches (22) are configured such that the adjacent permanent magnets (4) are separated by the air knife (24),
the adjustment between the notches (22) and the permanent magnets (4) being at least a sliding adjustment so as to allow placement of the permanent magnets (4) in their notches (22) by hand, an immobilization of the permanent magnets (4) in their notches (22), and a disassembly of the permanent magnets (4) from their notches (22) without damaging the permanent magnets (4), and **in that** the permanent magnets (4) are individually removable from the notches (22) of the housing (12) and can move under the effect of the vibrations and/or variations in speed and magnetic field, but cannot come into contact.

2. The rotor (2) according to claim 1, wherein the air knife (24) has a thickness greater than or equal to 0.01 mm.

3. The rotor (2) according to claim 1 or 2, wherein each magnet (4) is inserted into a respective notch (22) by one of its longitudinal ends, and the notches (22) are configured such that two circumferentially adjacent permanent magnets (4) of a same housing (12) are separated from one another by the air knife (24) when their ends are engaged (22) in their respective notches (22).

4. The rotor (2) according to any of claims 1 to 3, wherein two circumferentially adjacent permanent magnets (4), respectively inserted into a notch (2) of the housing (12), are radially offset.

5. The rotor (2) according to any one of claims 1 to 4, wherein each permanent magnet (4) has a unique elementary block shape having a bevel on each of its edges.

6. The rotor (2) according to any one of claims 1 to 5, wherein the periphery (10) of the body (6) is formed by a metal matrix of said body (6), the housing (12) extending away from said periphery (10).

7. The rotor (2) according to any one of claims 1 to 6, wherein the main axis of the housing (12) forms a non-zero angle with a radial direction of the body (6).

8. The rotor (2) according to any one of claims 1 to 7, wherein two circumferentially adjacent and symmetrical housings (12) in the radial direction of the body (6) form a V-shaped magnetic pole (14) or a substantially planar magnetic pole (14).

9. The rotor (2) according to claim 8, wherein the body (6) comprises several poles (14) distributed symmetrically according to a rotational symmetry.

10. The rotor (2) according to claim 8 or 9, wherein the body (6) comprises a substantially planar face (16) extending at the periphery (10) of said body (6) between two circumferentially adjacent poles (14).

11. The rotor (2) according to any one of claims 1 to 10, wherein it comprises a stack of bodies (6) forming a foliated assembly.

12. An electric motor (1) comprising a rotor (2) according to any one of the preceding claims.
